(19) Europäisches Patentamt

European Patent Office

Office européen des brevets

(11) EP 0 613 800 B1

## (12) EUROPEAN PATENT SPECIFICATION

(45) Date of publication and mention
of the grant of the patent:
**14.05.1997 Bulletin 1997/20**

(51) Int. Cl.$^6$: **B60J 10/08**, E06B 7/23

(21) Application number: **93309169.6**

(22) Date of filing: **17.11.1993**

(54) **Sealing strips**

Dichtungsband

Joint d'étanchéité

(84) Designated Contracting States:
**BE DE ES FR IT PT SE**

(30) Priority: **03.03.1993 GB 9304315**

(43) Date of publication of application:
**07.09.1994 Bulletin 1994/36**

(73) Proprietor: **DRAFTEX INDUSTRIES LIMITED**
**Edinburgh EH3 6YY, Scotland (GB)**

(72) Inventor: **Gallas, Gerard**
**F-44300 Nantes (FR)**

(74) Representative: **Foster, David Martyn et al**
**MATHISEN MACARA & CO.**
**The Coach House**
**6-8 Swakeleys Road**
**Ickenham Uxbridge UB10 8BZ (GB)**

(56) References cited:
**DE-A- 3 527 094          US-A- 4 143 497**

• **INGENIEURS DE L'AUTOMOBILE, vol.1141,
no.680, April 1993, COURBEVOIE,FRANCE
pages 51 - 56 PLANCHE-MULOCHER 'CONFORT
ACOUSTIQUE...'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.14.3/3.4

## Description

The invention relates to a sealing strip for sealing around at least part of the frame of an opening closable by a closure member, comprising compressible material positioned to be compressed between the frame and the closing closure member to provide a barrier seal.

Such a sealing strip is known, for example, from DE-A-3 527 094 or from US-A-4 143 497. However, although the compressible material, such as foamed or low density elastomeric material, used in such sealing strips provides good sealing characteristics against water, moisture or draughts, it may be less satisfactory as an acoustic screen - that is, it may provide low resistance to the transmission of exterior noise into the interior of the vehicle. The invention aims to deal with this problem.

The known sealing strip is therefore characterised, in accordance with the invention, in that the sealing strip comprises, in combination with the compressible material, additional material having a higher acoustic impedance than that of the compressible material and being so positioned in relation to the compressible material as to attenuate acoustic wave energy tending to pass between the frame and the closed closure member.

Sealing strips embodying the invention will now be described by way of example only and with reference to the accompanying drawings in which:

Figure 1 is a perspective view of a known form of sealing strip;

Figure 2 is a cross-section through the sealing strip of Figure 1, but showing it mounted on a bodywork flange surrounding a door opening in a vehicle body;

Figure 3 corresponds to Figure 2 but shows the configuration which the sealing strip adopts when the door closes in the opening;

Figure 4 is a cross-section corresponding to Figure 2 but showing a sealing strip embodying the invention;

Figure 5 corresponds to Figure 4 but shows the configuration which the sealing strip adopts when the door closes into the opening;

Figures 6 and 7 correspond respectively to Figures 4 and 5 but show a different form of sealing strip embodying the invention;

Figures 8 and 9 correspond to Figures 4 and 5 but show a further form of sealing strip embodying the invention; and

Figure 10 corresponds to Figure 4 and shows yet a further form of sealing strip embodying the invention.

In all the Figures, corresponding parts are indicated by the same reference numerals.

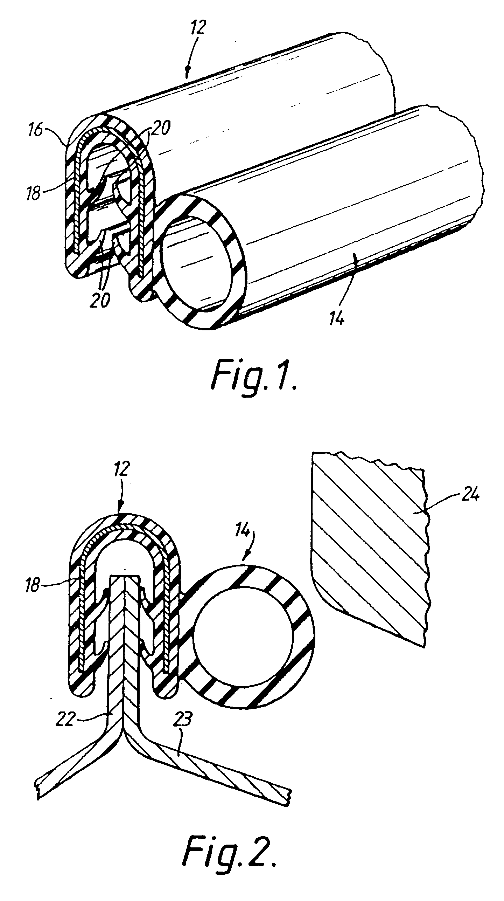

The sealing strip of Figures 1,2 and 3 comprises a longitudinally extending channel-shaped gripping part 12 on one outside wall of which is mounted a co-extending tubular sealing part 14. The gripping part 12 comprises extruded material, such as plastics or rubber material 16, in which is embedded a reinforcing core or carrier 18. The carrier 18 may take any suitable form. It may be made of metal which may be apertured at intervals along its length. In one form, the carrier comprises U-shaped elements arranged side by side along the length of the carrier to define a channel and either completely disconnected from each other or connected together by short integral connecting links. Instead, wire looped to and fro around the channel and along its length can be used. However, other forms of carrier construction are possible.

The gripping part 12 is preferably produced by a cross-head extrusion process.

The sealing part 14 is preferably made of soft rubber, such as sponge or cellular rubber. The sealing part 14 may again be made by an extrusion process. It may be made separately from the gripping part, and then adhesively attached to the gripping part in a separate operation. Instead, however, the whole sealing strip may be made by simultaneous extrusion.

The extruded material 16 of the gripping part 12 is preferably extruded with integral gripping lips 20 mounted on the inside facing walls of the channel. The extrusion process may be arranged so that the material of these gripping lips is softer than the remainder of the extruded material 18.

In use, the sealing strip is mounted around the frame of a door or other closable opening in a motor vehicle body by fitting the gripping part 12 onto the flange 22 (Figure 2) which extends around the opening and is formed where the inner and outer panels of the bodywork are brought together at the opening and welded. The configuration of the gripping part is such that it tightly grips the flange 22, this gripping action being assisted by the lips 20. In this way, therefore, the gripping part 12 supports the sealing part 14 so that the latter runs around the periphery of the opening and faces towards the door 24 or other closure member for the opening.

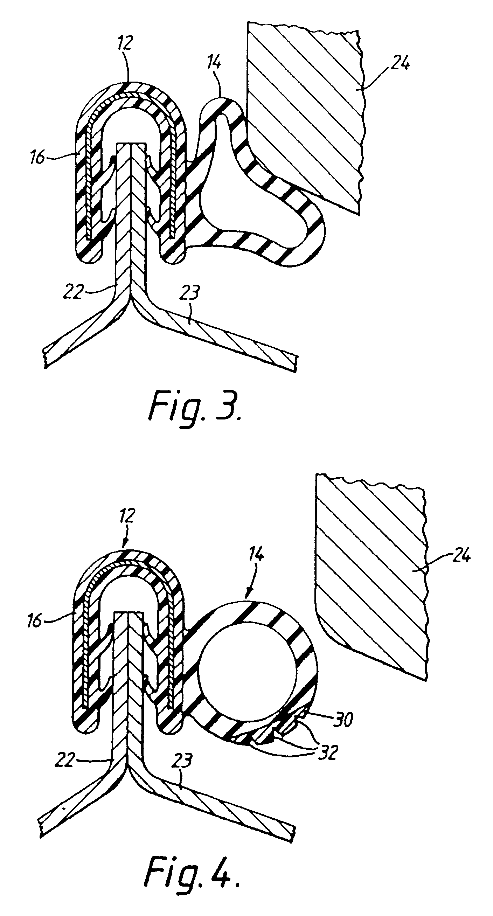

Figure 3 shows how the closing door 24 partially compresses the sealing part 14 to provide an effective seal around the opening against draught and water or moisture.

Figure 4 corresponds to Figure 2 but shows one of the sealing strips embodying the invention.

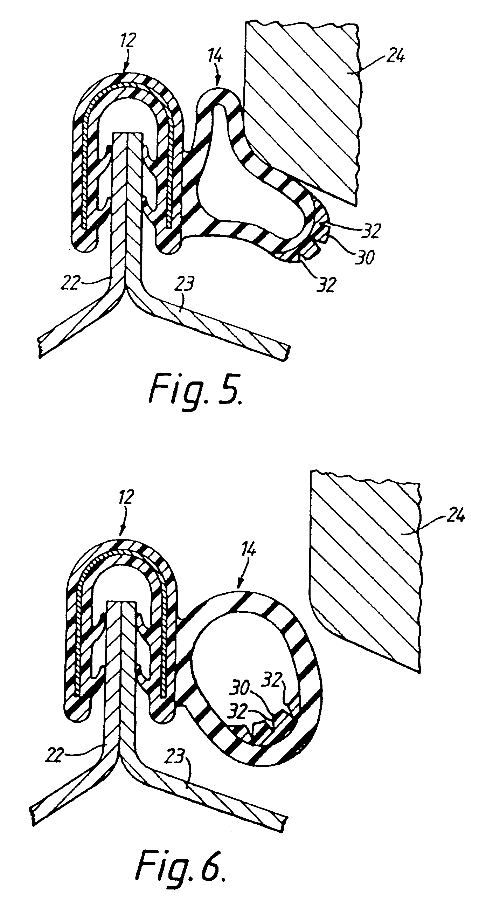

The sealing strip of Figures 4 and 5 differs from the sealing strip of Figures 1 to 3 in that at least part of the wall of its sealing part 14 is covered with or replaced by material 30 which is selected and constructed to form an acoustic screen. The normal material of the sealing part 14 (sponge or cellular rubber), although providing excellent sealing properties against ingress of draught, water or moisture, provides poor acoustic screening properties. Therefore, a sealing strip of the form shown in Figures 1 to 3 provides poor attenuation of external noise (such as road noise or aerodynamic noise), and thus provides low resistance to the transmission of such exterior noise into the interior of the vehicle.

When an acoustic wave strikes the elastic material of the sealing part 14, part of the acoustic energy passes through the wall, another part is reflected and some is absorbed. The amount of energy passing through the wall and the amount reflected respectively depend on the acoustic impedance of the wall, that is, on its mass and rigidity. The greater the mass of the wall and its rigidity, the greater will be its acoustic impedance and, consequently, the lower will be the wave energy passing through the wall. In the case of the sealing strip shown in Figures 1 to 3, the material of the sealing part has a very low acoustic impedance and a significant part of the acoustic energy thus passes through the sealing part into the interior of the vehicle.

In the case of the sealing strip shown in Figures 4 and 5, however, the amount of acoustic energy passing through the sealing part 14 when the door is closed (Figure 5) is greatly reduced by the acoustic screen 30. The acoustic screen comprises material of high acoustic impedance, for example a thermoplastic material or a compact elastomer.

Because of the type of material from which it is constructed, the acoustic screen 30 will tend to decrease the flexibility of the sealing part 14, thus tending to increase the effort require for closing the door. Therefore, the acoustic screen 30 is positioned on the sealing part 14 so as to minimise its effect on the latter's compressibility. As shown in Figure 5, it is positioned on the sealing part so that, when the door 24 is closed, the acoustic screen 30 is neither in contact with the door nor with the bodywork 23 adjacent the opening.

Advantageously, the acoustic screen 30 is formed with longitudinal notches 32 which facilitate deformation of the acoustic screen when the sealing part 14 is deformed by the closing door (see Fig. 5), thus offsetting the decreased flexibility of the acoustic screen material.

The acoustic screen 30 can be secured to the material of the sealing part 14 by adhesive. Preferably, though, it is formed by co-extrusion with the remainder of the material of the sealing part. The acoustic screen 30 may be formed as a layer on the outside of the sealing part whose cross-section is otherwise unaffected. Instead, the thickness of the wall of the main material of the sealing part may be locally reduced in the region of the acoustic screen 30 or may be completely replaced in that region by the acoustic screen.

In the sealing strip of Figures 4 and 5, the acoustic screen 30 is of course visible and it must therefore present an aesthetic appearance.

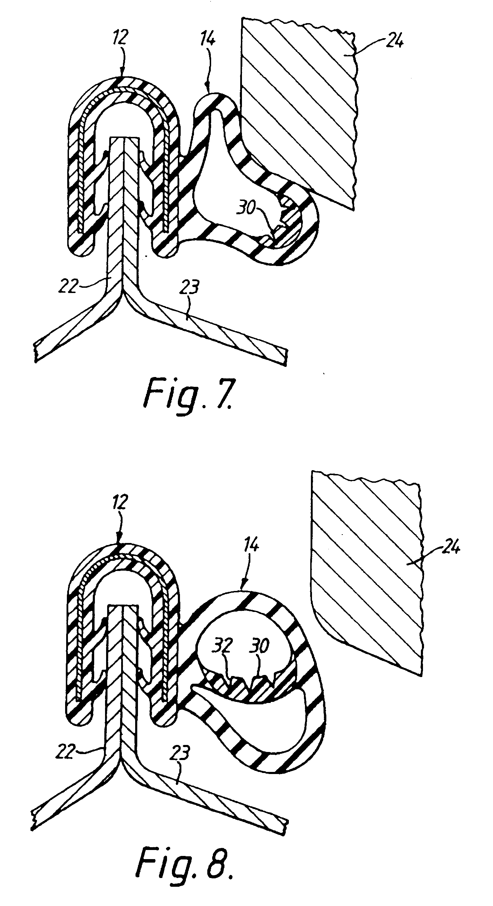

Figures 6 and 7 correspond to Figures 4 and 5 but show an arrangement in which the acoustic screen 30 is provided on the inside of the hollow sealing part 14 instead of on its outside. The construction and operation is otherwise the same. In this case, the acoustic screen has to be formed by co-extrusion with the remainder of the sealing part 14.

Although Figures 4 to 7 show the use of a sealing part 14 of hollow configuration, the sealing part may in certain circumstances take the form of a lip. In such a case, the acoustic screen 30 may be provided in the same way as described.

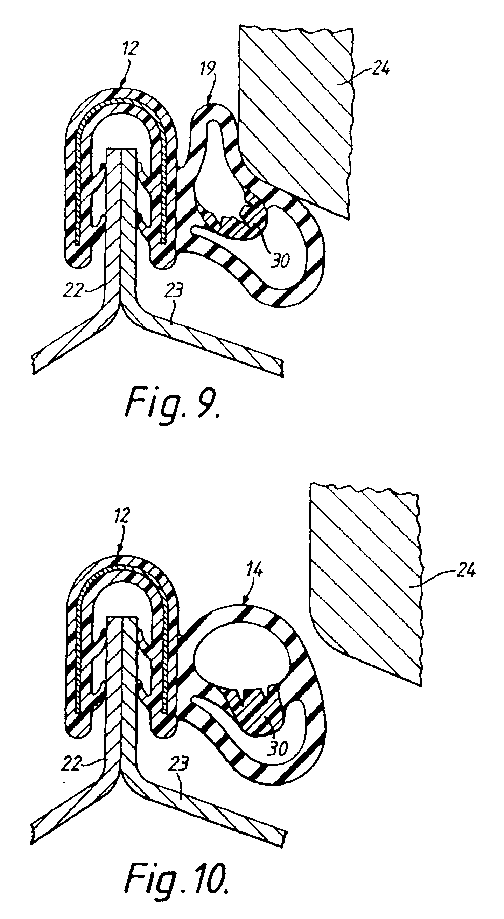

Figures 8 and 9 show another form in which the sealing part 14 is provided with a dividing wall 34. Part or all of this wall is constituted by the acoustic screen 30. The construction and operation is otherwise the same as for the other examples shown in Figures 4 to 7. Again, the acoustic screen of the strip of Figures 8 and 9 can only be produced by co-extrusion.

The sealing strip shown in Figure 10 is similar to that shown in Figures 8 and 9, except that the mass of the acoustic screen 30 is selected so as to increase the acoustic screening effect.

Thus, if $m$ is the mass of the acoustic screen 30 and $k$ is the rigidity of the wall extending across the interior of the sealing part 14, the assembly comprising the acoustic screen and this wall will have a resonant frequency $f$, where

$$f = \frac{1}{2\pi} \sqrt{\frac{k}{m}}$$

Therefore, incident acoustic wave energy at the frequency $f$ will cause the acoustic screen and its supporting wall to resonate at this frequency. However, incident acoustic wave energy at frequencies above $f$ will cause the acoustic screen and the wall to vibrate in opposition to the incident energy. The acoustic impedance and thus the acoustic screening effect will be increased or reinforced. The amount of acoustic energy reflected by the acoustic screen will be increased by the resultant vibration of the mass $m$.

Therefore, by selecting the mass $m$ and the rigidity $k$ in dependence on the primary frequency band of the acoustic energy to be attenuated, the attenuation effect can be considerably increased. The resonant frequency should be low relative to the passband of the human ear (which is from about 20 Hz to about 20 kHz). A value for the resonant frequency of about 30 to 50 Hz may be used, for example.

It is necessary, though, to ensure that the mass $m$ is not increased to such an extent that the resultant volume of the acoustic screen 30 causes the latter to come into contact with the internal wall of the sealing part 14 at maximum deformation. The optimum geometry for the acoustic screen 30 can be obtained by computer-aided design.

**Claims**

1. A sealing strip for sealing around at least part of the frame of an opening closable by a closure member (24), comprising compressible material (14) positioned to be compressed between the frame (22) and the closing closure member (24) to provide a barrier seal, characterised in that the sealing strip comprises, in combination with the compressible material (14), additional material (30) having a higher acoustic impedance than that of the compressible material (14) and being so positioned in relation to the compressible material (14) as to attenuate acoustic wave energy tending to pass between the frame (22) and the closed closure member (14).

2. A sealing strip according to claim 1, characterised in that the additional material (30) is positioned so as to minimise its effect on the compressibility of the compressible material (14).

3. A sealing strip according to claim 1, characterised in that the additional material (30) is connected to the compressible material (14) and is provided with longitudinally extending notches (32) to increase its flexibility in response to compression of the compressible material (14).

4. A strip according to any preceding claim, characterised in that the compressible material is in the form of a hollow tube (14) which is partially collapsed by compression by the closing closure member (24), and in that the additional material (30) is mounted on a part of the wall of the tube (14) which is substantially clear of both the closing closure (24) member and the frame (22).

5. A strip according to claim 4, characterised in that the additional material (30) is positioned on the outside of the wall of the tube (14).

6. A strip according to claim 4, characterised in that the additional material (30) is positioned on the inside of the wall of the tube (14).

7. A strip according to any one of claims 1 to 3, characterised in that the compressible material is in the form of a hollow tube (14) which is positioned to be partially collapsed by the closing closure member (24), the tube having an internal partition wall which carries or is partially formed by the additional material (30).

8. A strip according to any preceding claim, characterised in that the compressible material (14) and the additional material (30) are produced by co-extrusion.

9. A strip according to any preceding claim, characterised in that the mass of the additional material (30) and the rigidity with which it is supported are so selected in relation to the frequency of the acoustic wave energy to be attenuated as to provide dynamic attenuation of the acoustic energy.

10. A strip according to any preceding claim, characterised in that it is mounted on a channel-shaped gripping part (12) adapted to engage the frame (22).

11. A strip according to any preceding claim, characterised in that the compressible material (14) is soft rubber, such as sponge rubber.

12. A strip according to claim 11, characterised in that the additional material (30) is a thermoplastic material or a compact elastomer.

**Patentansprüche**

1. Dichtungsleiste zum Abdichten rund um wenigstens ein Teil eines durch ein Schließteil verschließbaren Rahmens einer Öffnung, mit einem zusammendrückbaren Material (14), das so angeordnet ist, daß es zwischen dem Rahmen (22) und dem Schließteil (24) zusammengedrückt wird, um eine Dichtbarriere zu schaffen, **dadurch gekennzeichnet,** daß die Dichtungsleiste in Verbindung mit dem zusammendrückbaren Material (14) zusätzliches Material (30) umfaßt, das eine höhere akustische Dämpfung als die des zusammendrückbaren Materials (14) aufweist und hinsichtlich auf das zusammendrückbare Material (14) derart angeordnet ist, daß es die Energie akustischer Wellen dämpft, die darauf abzielen, zwischen dem Rahmen (22) und dem geschlossenen Schließteil (24) hindurchzugehen.

2. Dichtungsleiste nach Anspruch 1, dadurch gekennzeichnet, daß das zusätzliche Material (30) an einer solchen Stelle angeordnet ist, daß dessen Beeinflussung der Zusammendrückbarkeit des zusammendrückbaren Materials (14) minimal ist.

3. Dichtungsleiste nach Anspruch 1, dadurch gekennzeichnet, daß das zusätzliche Material (30) mit dem zusammendrückbaren Material (14) verbunden ist und mit sich in Längsrichtung erstreckenden Kerben (32) versehen ist, um seine Flexibilität hinsichtlich auf das Zusammendrücken des zusammendrückbaren Materials (14) zu steigern.

4. Leiste nach einem der vorhergehenden Ansprüche, dadurch gekennzeichnet, daß das zusammendrückbare Material die Form eines hohlen Rohres (14) hat, das durch Zusammendrücken beim Schließen des Schließteils (24) teilweise eingeknickt wird, und dadurch, daß das zusätzliche Material (30) an einem Teil der Wand des Rohres (14) angeordnet ist, der im wesentlichen unbehindert ist von den beiden Teilen, dem Schließteil (24) und dem Rohr (22).

5. Leiste nach Anspruch 4, dadurch gekennzeichnet, daß das zusätzliche Material (30) auf der Außenseite der Wand des Rohres (14) angeordnet ist.

6. Leiste nach Anspruch 4, dadurch gekennzeichnet, daß das zusätzliche Material (30) auf der Innenseite der Wand des Rohres (14) angeordnet ist.

7. Leiste nach einem der Ansprüche 1 bis 3, dadurch gekennzeichnet, daß das zusammendrückbare Material die Form eines hohlen Rohres (14) hat, das derart angeordnet ist, daß es durch das Schließen des Schließteils (24) teilweise eingedrückt wird, wobei das Rohr einen inneren Wandteil aufweist, der das zusätzliche Material (30) trägt oder teilweise von diesem gebildet ist.

8. Leiste nach einem der vorhergehenden Ansprüche, dadurch gekennzeichnet, daß das zusammendrückbare Material (14) und das zusätzliche Material (30) durch gemeinsames Extrudieren hergestellt sind.

9. Leiste nach einem der vorhergehenden Ansprüche, dadurch gekennzeichnet, daß die Masse des zusätzlichen Materials (30) und die Festigkeit, mit der dieses getragen wird, hinsichtlich auf die Frequenz der Energie der zu dämpfenden akustischen Wellen ausgewählt ist, um für eine dynamische Dämpfung der akustischen Energie zu sorgen.

10. Leiste nach einem der vorhergehenden Ansprüche, dadurch gekennzeichnet, daß diese an einem kanalförmigen Klemmteil (12) angeordnet ist, der daran angepaßt ist, mit dem Rahmen (22) in Eingriff zu stehen.

11. Leiste nach einem der vorhergehenden Ansprüche, dadurch gekennzeichnet, daß das zusammendrückbare Material (14) ein weiches Gummi wie beispielsweise ein Schwammgummi ist.

12. Leiste nach Anspruch 11, dadurch gekennzeichnet, daß das zusätzliche Material (30) ein thermoplastisches Material oder ein kompaktes Elastomer ist.

**Revendications**

1. Bande d'étanchéité pour former joint autour d'au moins une partie du cadre d'une fermeture pouvant être fermée par un élément de fermeture (24), comprenant une matière compressible (14) positionnée de façon à être comprimée entre le cadre (22) et l'élément de fermeture (24) qui se ferme pour réaliser un joint étanche, caractérisée en ce que la bande d'étanchéité comprend, en combinaison avec la matière compressible (14), une matière additionnelle (30) ayant une plus grande impédance acoustique que la matière compressible (14) et qui est positionnée par rapport à la matière compressible (14) de manière à atténuer l'énergie des ondes acoustiques qui tend à passer entre le cadre (22) et l'élément de fermeture fermé (14).

2. Bande d'étanchéité selon la revendication 1, caractérisée en ce que la matière additionnelle (30) est positionnée de manière à réduire à un minimum son effet sur la compressibilité de la matière compressible (14).

3. Bande d'étanchéité selon la revendication 1, caractérisée en ce que la matière additionnelle (30) est fixée à la matière compressible (14) et est munie d'encoches (32) s'étendant longitudinalement pour augmenter sa flexibilité en réponse à la compression de la matière compressible (14).

4. Bande selon une quelconque des revendications précédentes, caractérisée en ce que la matière compressible est sous la forme d'un tube creux (14) qui est partiellement écrasé par la compression de l'élément de fermeture (24) qui se ferme, et en ce que la matière additionnelle (30) est montée sur une partie de la paroi du tube (14) qui est sensiblement dégagée de l'élément de fermeture (24) qui se ferme et du cadre (22).

5. Bande selon la revendication 4, caractérisée en ce que la matière additionnelle (30) est positionnée sur le côté extérieur de la paroi du tube (14).

6. Bande selon la revendication 4, caractérisée en ce que la matière additionnelle (30) est positionnée sur le côté intérieur de la paroi du tube (14).

7. Bande selon une quelconque des revendications 1 à 3, caractérisée en ce que la matière compressible est sous la forme d'un tube creux (14) qui est positionné de façon à être partiellement écrasé par l'élément de fermeture (24) qui se ferme, le tube ayant une paroi de cloisonnement intérieur qui porte la matière additionnelle (30) ou est partiellement formée par cette matière.

8. Bande selon une quelconque des revendications précédentes, caractérisée en ce que la matière compressible (14) et la matière additionnelle (30) sont produites par coextrusion.

9. Bande selon une quelconque des revendications précédentes, caractérisée en ce que la masse de la matière additionnelle (30) et la rigidité avec laquelle elle est supportée sont choisies en fonction de la fréquence de l'énergie des ondes acoustiques qu'il s'agit d'atténuer de manière à réaliser une atténuation dynamique de l'énergie acoustique.

10. Bande selon une quelconque des revendications précédentes, caractérisée en ce qu'elle est montée sur une partie de serrage (12) en forme de gouttière adaptée pour entrer en prise avec le cadre (22).

11. Bande selon une quelconque des revendications précédentes, caractérisée en ce que la matière compressible (14) est un caoutchouc mou, tel qu'une mousse de caoutchouc.

12. Bande selon la revendication 11, caractérisée en ce que la matière additionnelle (30) est une matière thermoplastique ou un élastomère compact.

Fig.1.

Fig.2.

Fig. 3.

Fig. 4.

Fig. 5.

Fig. 6.

Fig. 7.

Fig. 8.

Fig. 9.

Fig. 10.